# EUROPÄISCHE PATENTSCHRIFT

(11) **EP 3 117 887 B1**
(45) Veröffentlichungstag und Bekanntmachung des Hinweises auf die Patenterteilung: **07.11.2018**
(21) Anmeldenummer: 16179601.6
(22) Anmeldetag: 15.07.2016
(51) Int. Cl.: B05B 15/00

(54) **VORRICHTUNG ZUM ABSCHEIDEN VON OVERSPRAY UND BESCHICHTUNGSANLAGE MIT DER VORRICHTUNG**
DEVICE FOR SEPARATING OVERSPRAY AND SPRAY BOOTH WITH SUCH A DEVICE
DISPOSITIF DE SEPARATION DE LA SURPULVERISATION ET INSTALLATION DE REVETEMENT COMPRENANT LEDIT DISPOSITIF

(30) Priorität: 17.07.2015 DE 102015009099
(43) Veröffentlichungstag der Anmeldung: 18.01.2017
(73) Patentinhaber: Venjakob Maschinenbau GmbH & Co. KG, 33378 Rheda-Wiedenbrück (DE)
(72) Erfinder: Hauser, Wolfgang, 33378 Rheda-Wiedenbrück (DE); Theismann, Tobias, 33442 Herzebrock-Clarholz (DE)
(74) Vertreter: DTS Patent- und Rechtsanwälte Schnekenbühl und Partner mbB

(56) Entgegenhaltungen:
- WO-A1-01/66265
- WO-A2-2009/012892
- FR-A5- 2 115 590
- IT-A1- MI20 100 635
- IT-A1- MI20 111 368
- JP-U- S63 126 066
- US-A- 3 395 972
- US-A- 5 152 839

## Beschreibung

Die Erfindung befasst sich mit einer Vorrichtung zum Abscheiden von Overspray. Ferner befasst sich die Erfindung mit einer Beschichtungsanlage aufweisend eine Vorrichtung zum Abscheiden von Overspray.
Aus dem Stand der Technik ist eine Vielzahl von Vorrichtungen zum Abscheiden von Overspray bekannt. In der IT MI 20 100 635 A1 oder in der DE 10 2009 058 208 A1 ist eine gattungsgemäße Vorrichtung sowie eine Anlage mit einer solchen beschrieben. Die Anlage mit der Vorrichtung weist einen komplexen Aufbau auf, ist mit hohen Wartungs- und Herstellungskosten verbunden. Nachteilig an den Vorrichtung ist auch, dass der Wirkungsgrad noch optimierbar ist.
Es ist daher Aufgabe der vorliegenden Erfindung, eine Vorrichtung zum Abscheiden von Overspray vorzusehen, bei der die Nachteile aus dem Stand der Technik überwunden werden.

Die Aufgabe wird insbesondere durch den unabhängigen Anspruch 1 gelöst.

Die Aufgabe wird weiterhin insbesondere gelöst durch eine Beschichtungsanlage aufweisend eine Lackauftragseinrichtung, ein Transportband und eine Vorrichtung zum Abscheiden von Overspray.

Weitere vorteilhafte Ausgestaltungen der vorliegenden Erfindung sind in den abhängigen Ansprüchen angegeben.

Durch das Vorsehen der Vorrichtung lässt sich Overspray auf einfache Weise, effektiv und kostengünstig mittels der Abscheider aufnehmen.

Ferner wird durch das Vorsehen der Beschichtungsanlage mit der Vorrichtung eine Anlage bereitgestellt, die gegenüber den aus den Stand der Technik bekannten Anlagen einen hohen Wirkungsgrad mit einem einfachen Aufbau aufweist.

Vorzugsweise bedeutet "gegeneinander geneigt", dass der Overspray aufnehmende Bereich des ersten Abscheidemittels und der Overspray aufnehmende Bereich des zweiten Abscheidemittel V-förmig gegeneinander orientiert oder geneigt sind, gegenseitig geneigt sind, zueinander geneigt sind, trichterbildend geneigt sind, zu einer Symmetrieachse oder Mittelachse der Vorrichtung gegenseitig geneigt ausgebildet sind und/oder in eine gegenseitige Förderrichtung geneigt sind.

Bevorzugt ist der Overspray aufnehmende Bereich, der Teil des Abscheidemittels, der in direktem Kontakt mit dem Overspray oder mit Overspray versetzter Luft steht.

Vorzugsweise ist die Vorrichtung eine Abscheidevorrichtung. Bevorzugt ist die Vorrichtung ein Lackaustragsystem. Besonders bevorzugt ist die Vorrichtung Teil der Beschichtungsanlage.

Bevorzugt sind beide Abscheidemittel im Overspray aufnehmenden Bereich in einem selben Winkeln gegeneinander geneigt.

In einer weiteren Ausführungsform sind die Overspray aufnehmenden Bereiche aufeinander zulaufend oder voneinander weglaufend ausgebildet.

Damit werden zwei Möglichkeiten vorgesehen, die Förderrichtungen der Overspray aufnehmenden Bereiche festzulegen.
In einer weiteren Ausführungsform sind beide Abscheidemittel in den Overspray aufnehmenden Bereichen in unterschiedlichen Winkeln gegeneinander geneigt. Hierdurch lassen sich unterschiedliche Steigungen der geneigt ausgebildet Abscheidemittel einstellen.
In einer weiteren Ausführungsform der Erfindung sind die Abscheidemittel Bahnen aus Papier, Vlies, Folien oder einer Mischung davon. Besonder bevorzugt handelt es sich um ein mit Folie verstärktes Papier, insbesondere um ein zumindest teilweise auf Folie aufgebrachtes Papier.
Vorzugsweise sind die Abscheidemittel saugfähig. Bevorzugt sind die Abscheidemittel eingerichtet, Overspray aufzunehmen. Besonders bevorzugt sind die Abscheidemittel eingerichtet aufgenommens Overspray nicht wieder abzugeben.
Durch das Vorsehen von Bahnen aus Papier, Vlies, Folien oder einer Mischung davon werden Materialien bereitgestellt, die ein Aufnehmen des Oversprays auf kostengünstige Weise ermöglichen.
Die Abscheidemittel sind bevorzugt als endloses Band ausgebildet, so dass beispielsweise eine Bahn von Abscheidemittel von der Abrollvorrichtung abgerollt wird und auf die Aufrollvorrichtung aufgerollt wird und von dort wieder der Abrollvorrichtung zugeführt wird. Dadurch kann das Abscheidemittel im Endlosbetrieb eingesetzt werden.

Erfindungsgemäß weist der erste Abscheider eine erste Abrollvorrichtung und eine erste Aufrollvorrichtung auf, die eingerichtet sind, um das erste Abscheidemittel von der ersten Abrollvorrichtung abzurollen und auf die erste Aufrollvorrichtung aufzurollen und der zweite Abscheider weist eine zweite Abrollvorrichtung und eine zweite Aufrollvorrichtung auf, die eingerichtet sind, um das zweite Abscheidemittel von der zweiten Abrollvorrichtung abzurollen und auf die zweite Aufrollvorrichtung aufzurollen.

Vorzugsweise ist wenigstens eine der Rollvorrichtung antreibbar ausgebildet. Bevorzugt ist die Aufrollvorrichtung mittels eines Elektromotors oder eines pneumatischen Antriebs antreibbar.

Vorzugsweise sind das erste Abscheidemittel und das zweite Abscheidemittel voneinander beabstandet, insbesondere horizontal beabstandet oder vorzugsweise vertikal beabstandet. Bevorzugt bildet sich ein Spalt zwischen dem ersten Abscheidemittel und dem zweiten Abscheidemittel aus. Durch das Vorsehen des Spalts lässt sich ein Luftstrom von oberhalb der Abscheider entlang der Overspray aufnehmenden Bereiche nach unterhalb der Abscheider erzeugen.

Vorzugsweise bewegen sich die Abscheidemittel während einer Rotation der angetriebenen Rollvorrichtung in Abhängigkeit von einer Sättigung der mit Overspray versetzten Luft. Bevorzugt ist eine Geschwindigkeit der angetriebenen Rollvorrichtung einstellbar. Damit lässt sich im kontinuierliche Lackierbetrieb ausreichend Overspray aufnehmen.

Vorzugsweise erfolgt ein Aufrollen der Abscheidemittel auf die Aufrollvorrichtungen solange bis sich kein Abscheidemittel mehr von den Abrollvorrichtungen abrollen lässt. Bevorzugt lassen sich die Abrollvorrichtungen und die Aufrollvorrichtungen austauschen, sobald sich kein Abscheidemittel mehr von der Abrollvorrichtung abrollen lässt.

In einer weiteren Ausführungsform der Erfindung weist der erste Abscheider mindestens eine Umlenkrolle zur Führung des ersten Abscheidemittels auf und der zweite Abscheider weist mindestens eine Umlenkrolle zur Führung des zweiten Abscheidemittels auf.
Durch das Vorsehen von Umlenkrollen lassen sich die Abscheidemittel auf einfache Weise führen und entsprechend der Geometrie der Vorrichtung einstellen.

Erfindungsgemäß überdeckt ein erstes Abscheidemittel ein zweites Abscheidemittel zumindest teilweise.
Vorzugsweise sind die Abscheidemittel versetzt übereinander angeordenbar. Dadurch wird eine Möglichkeit geschaffen, Overspray noch effektiver aufnehmen zu können.
Bevorzugt ist mindestens eine der Umlenkrollen des ersten Abscheiders zu mindestens einer der Umlenkrollen des zweiten Abscheiders asymmetrisch in der Vorrichtung angeordnet. Auf diese Weise ist eine Überdeckung des ersten Abscheidemittels mit dem zweiten Abscheidemittel einstellbar.

Erfindungsgemäß ist dem ersten Abscheider und dem zweiten Abscheider in der Vorrichtung eine Luftansaugvorrichtung nachgeschaltet, wobei die Luftansaugvorrichtung eingerichtet ist, mit Overspray versetzte Luft in Richtung zu den Overspray aufnehmenden Bereichen der Abscheidemittel zu fördern.
Auf diese Weise entsteht ein Luftsog, der entlang den Overspray aufnehmenden Bereichen der Abscheidemittel führbar ist. Hierdurch kommt das Overspray direkt mit den Overspray aufnehmenden Bereichen der Abscheidemittel in Kontakt. Vorzugsweise ist die Luftansaugvorrichtung in einem Bereich unterhalb des ersten Abscheiders und des zweiten Abscheiders vorgesehen. Bevorzugt ist die Luftansaugvorrichtung in einem Bereich unterhalb des ersten Abscheidemittels und des zweiten Abscheidemittels vorgesehen.

Bevorzugt ist in der Luftansaugvorrichtung ein Saugkanal und ein Luftsaugmittel vorgesehen, um den Luftsog zu erzeugen. Bevorzugt ist das Luftsaugmittel ein Luftsauger, ein Ventilator, ein Propellerschraube oder dergleichen.

Bevorzugt ist die Luftansaugvorrichtung eingerichtet, mit Overspray versetzte Luft entlang den Overspray aufnehmenden Bereichen der Abscheidemittel in Richtung durch den Spalt anzusaugen.

Vorzugsweise ist unter einem Fördern ein Saugen, ein Ansaugen oder Transportieren zu verstehen.

In einer weiteren Ausführungsform der Erfindung ist in einem Bereich zwischen der ersten Abrollvorrichtung und der ersten Aufrollvorrichtung des ersten Abscheiders in der Vorrichtung eine Luftansaugvorrichtung vorgesehen und in einem Bereich zwischen der zweiten Abrollvorrichtung und der zweiten Aufrollvorrichtung des zweiten Abscheiders ist eine weiterere Luftansaugvorrichtung vorgesehen, wobei die Luftansaugvorrichtungen eingerichtet sind, mit Overspray versetzte Luft in Richtung zu den Overspray aufnehmenden Bereichen der Abscheidemittel zu fördern.

Auf diese Weise wird eine Alternative vorgestellt, um einen Luftsog zu erzeugen, der entlang den Overspray aufnehmenden Bereichen der Abscheidemittel führbar ist.

Ein Bandförderer (auch Gurtbandförderer oder Gurtförderer) ist eine stationäre Förderanlage, die zur Familie der Stetigförderer gehört. Sie weisen eine sehr hohe Betriebssicherheit und sind zuverlässige Transportsysteme, die ökonomisch, sehr produktiv und umweltfreundlich auf Grund ihres geringen Energiebedarfs arbeiten.

Besonders bevorzugt sind das Förderband und das Abstreifband Endlos-Bänder.

In einer weiteren Ausführungsform der Erfindung weist die Vorrichtung wenigstens eine Filtereinheit auf.

Durch das Vorsehen der Filtereinheit lassen sich Reste des Oversprays, die nicht von den beiden Abscheidemitteln aufgenommen worden sind, auf einfache Weise aus der Vorrichtung austragen.

Vorzugsweise ist die Filtereinheit der Luftansaugvorrichtung nachgeschaltet. Bevorzugt ist die Filtereinheit in einem Bereich unterhalb der beiden Abscheider in der Vorrichtung angeordnet. Weiter bevorzugt ist die Filtereinheit in einem Bereich der Tragkonstruktion der Vorrichtung unterhalb der beiden Abscheider vorgesehen. Besonders bevorzugt ist die Filtereinheit in einem Bereich seitlich neben oder hinterhalb der Abscheider in der Vorrichtung angeordnet. Auf diese Weise sind mehrere Möglichkeiten vorgesehen, die Filtereinheit anzuordnen.

Vorzugsweise weist die Filtereinheit einen Filter auf, der ein Papierfilter, insbesondere ein Andreafilter oder ein Vliesfilter ist. Bevorzugt ist ein Filter der Filtereinheit auswechselbar. Besonders bevorzugt ist die Filtereinheit auswechselbar.

Vorzugsweise ist die Vorrichtung zum Abscheiden von Overspray in einem Bereich unterhalb des Transportbandes angeordnet. Bevorzugt ist die Vorrichtung in einem Bereich seitlich neben dem Transportband angeordnet. Besonders bevorzugt ist die Vorrichtung in einem Bereich hinter dem Transportband angeordnet. Auf diese Weise sind mehrere Möglichkeiten vorgesehen, die Vorrichtung zum Transportband anzuordnen.

Vorzugsweise ist die Lackauftragseinrichtung vorgesehen, zu lackierende Bauteile, die auf dem Transportband aufgelegt sind oder die hängen, zu lackieren. Bevorzugt weist die Lackauftragseinrichtung ein zerstäubendes System auf. Bevorzugt ist das zerstäubende System ein Glockenauftragssystem oder ein Ultraschallzerstäubendes System. Besonders bevorzugt ist das zerstäubendes System ein Spritzsystem mit wenigstens einer Spritzpistole, die vorzugsweise fest installiert oder beweglich angeordnet ist. Besonders bevorzugt dient das Spritzsystem einen Lackauftrag auf die zu lackierenden Bauteile zu ermöglichen.

Bevorzugt ist die Lackauftragseinrichtung eine Spritzlackier-Anlage für die Verarbeitung von nahezu allen Lacksystemen wie z.B. 1K, 2K-Lacke, wasserbasierten-, lösungsmittelbasierten- oder UV-härtenden Lacken.

Während eines Lackiervorganges wird die Luft mit Overspray versetzt, d.h. es liegt eine hohe Konzentration von Overspray in der Luft vor. Die mit Overspray versetzte Luft ist von den Abscheidemitteln der Abscheider aufnehmbar. Bevorzugt unterstützt die Luftansaugvorrichtung eine Förderung der mit Overspray versetzten Luft in Richtung nach unterhalb der Abscheider.

Weitere Vorteile und Einzelheiten der Erfindung werden anhand der in den Figuren dargestellten Ausführungsbeispiele erläutert. Die Figuren zeigen im Einzelnen:
- **Figur 1**: ein schematischer Querschnitt durch eine erfindungsgemäße Vorrichtung,
- **Figur 2**: eine Ansicht der erfindungsgemäßen Vorrichtung aus Figur 1,
- **Figur 3**: eine Ansicht einer erfindungsgemäße Beschichtungsanlage mit der Vorrichtung aus Figur 2,
- **Figur 4**: eine weitere Ansicht der erfindungsgemäße Beschichtungsanlage und
- **Figur 5**: eine weitere Ansicht der erfindungsgemäße Beschichtungsanlage.

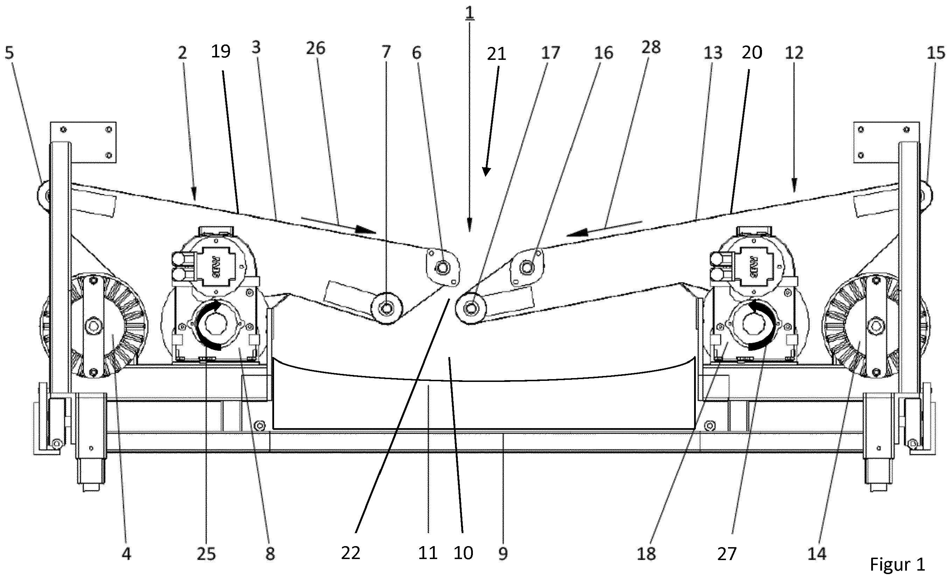

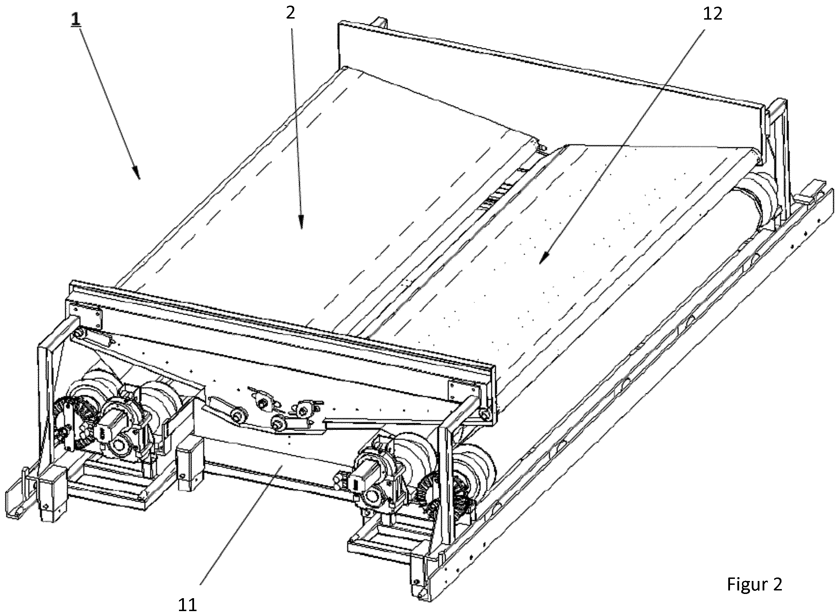

In **Figur 1** ist ein schematischer Querschnitt durch eine erfindungsgemäße Vorrichtung gezeigt und in In **Figur 2** ist eine Ansicht der erfindungsgemäßen Vorrichtung aus Figur 1 gezeigt.

Die Vorrichtung 1 dient dem Abscheiden von Overspray 21. Die Vorrichtung 1 weist einen ersten Abscheider 2 und einen zweiten Abscheider 12 auf.

Der erste Abscheider 2 weist ein erstes Abscheidemittel 3 mit einem ersten Overspray aufnehmenden Bereich 19 auf. Der zweiten Abscheider 12 weist ein zweites Abscheidemittel 13 mit einem zweiten Overspray aufnehmenden Bereich 20 auf. Die Overspray aufnehmenden Bereiche 19, 20 sind gegeneinander zulaufend geneigt. Beide Abscheidemittel 3, 13 sind in den Overspray aufnehmenden Bereichen 19, 20 in gleichen Winkeln gegeneinander zulaufend geneigt. Damit bilden die Overspray aufnehmenden Bereiche 19, 20 eine trichterförmige Geometrie im Querschnitt aus. Alternativ können die Winkel auch unterschiedlich sein. Die mit Overspray versetze Luft 21 befindet sich in der Blattebene oberhalb der beiden Abscheider 2, 12 in der Vorrichtung 1.

Beide Abscheidemittel 3, 13 sind voneinander beabstandet. Das erste Abscheidemittel 3 überdeckt zumindest teilweise das zweite Abscheidemittel 13, wobei ein Spalt 22 zwischen dem ersten Abscheidemittel 3 und dem zweiten Abscheidemittel 13 ausgebildet ist.

Die Abscheidemittel 3, 13 sind als Overspray aufnehmende Mittel 19, 20 ausgebildet, vorzugsweise Papierbahnen oder Bahnen aus Vlies.

Der erste Abscheider 2 weist eine erste Abrollvorrichtung 4 und eine erste Aufrollvorrichtung 8 auf. Damit kann das erste Abscheidemittel 3 von der ersten Abrollvorrichtung 4 abgerollt und auf die erste Aufrollvorrichtung 8 aufgerollt werden. Der erste Abscheider 2 weist drei Umlenkrollen 5, 6, 7 zur Führung des Abscheidemittels 3 auf.

Der zweite Abscheider 12 weist eine zweite Abrollvorrichtung 14 und eine zweite Aufrollvorrichtung 18 auf. Damit kann das zweite Abscheidemittel 13 von der zweiten Abrollvorrichtung 14 abgerollt und auf die zweite Aufrollvorrichtung 18 aufgerollt werden. Der zweite Abscheider 12 weist drei Umlenkrollen 15, 16, 17 zur Führung des Abscheidemittels 13 auf.

In der Blattebene ist unterhalb der beiden Abscheider 2, 12 im Bereich der Tragkonstruktion 9 eine Luftansaugvorrichtung 10 in der Vorrichtung 1 vorgesehen. Die Luftansaugvorrichtung 10 ist eingerichtet, mit Overspray versetzte Luft 21 entlang den Overspray aufnehmenden Bereiche 19, 20 der Abscheidemittel 3, 13 durch den Spalt 22 anzusaugen. Dabei ist in der Luftansaugvorrichtung 10 ein Luftkanal und ein Luftsaugmittel (nicht dargestellt) vorgesehen, um den Luftsog zu erzeugen.

Alternativ kann in einem Bereich zwischen der ersten Abrollvorrichtung 4 und der ersten Aufrollvorrichtung 8 des ersten Abscheiders 2 eine Luftansaugvorrichtung vorgesehen sein sowie in einem Bereich zwischen der zweiten Abrollvorrichtung 14 und der zweiten Aufrollvorrichtung 18 des zweiten Abscheiders 12 kann eine weiterere Luftansaugvorrichtung vorgesehen sein. Damit kann Overspray versetzte Luft 21 aus der Vorrichtung 1 in Richtung zu den Abscheidemitteln 3, 13 gefördert werden.

Infolge einer Betätigung der ersten Aufrollvorrichtung dreht sich die erste Aufrollvorrichtung 8 in eine Richtung 25 im Uhrzeigersinn und das erste Abscheidemittel 3 wird in eine Förderrichtung 26 bewegt.

Infolge einer Betätigung der zweiten Aufrollvorrichtung 18 dreht sich die zweite Aufrollvorrichtung 18 in eine Richtung 27 gegen den Uhrzeigersinn und das zweite Abscheidemittel 3 wird in eine Förderrichtung 28 bewegt.

Dabei sind beide Aufrollvorrichtung 8, 18 mittels eines Elektromotors (nicht gezeigt) angetrieben. Vorzugsweise bewegen sich die Abscheidemittel 3, 13 während einer Rotation der angetriebenen Aufrollvorrichtung 8, 18 in Abhängigkeit von einer Sättigung der mit Overspray versetzten Luft. Bevorzugt ist eine Geschwindigkeit der angetriebenen Aufrollvorrichtung 8, 18 einstellbar. Damit lässt sich im kontinuierliche Lackierbetrieb ausreichend Overspray aufnehmen.

Ein Aufrollen auf die Aufrollvorrichtungen 8, 18 erfolgt solange bis sich kein Abscheidemittel 3, 13 mehr von den Abrollvorrichtungen 4, 14 abrollen lässt. Danach erfolgt ein Austauschen der Abrollvorrichtungen 4, 14 und der Aufrollvorrichtungen 8, 18.

Ferner weist die Vorrichtung 1 eine Filtereinheit 11 auf. Die Filtereinheit 11 weist einen auswechselbaren Papierfilter auf. Die Filtereinheit 11 ist eingerichtet, Reste von Overspray aufzunehmen, die infolge der Saugwirkung der Luftansaugvorrichtung 10 angesaugt worden sind und die nicht auf den Overspray aufnehmenden Bereichen 19, 20 der Abscheidemittel 3, 13 haften geblieben sind.

Durch das Vorsehen der Vorrichtung lässt sich Overspray auf einfache Weise, effektiv und kostengünstig mittels der Abscheider aufnehmen.

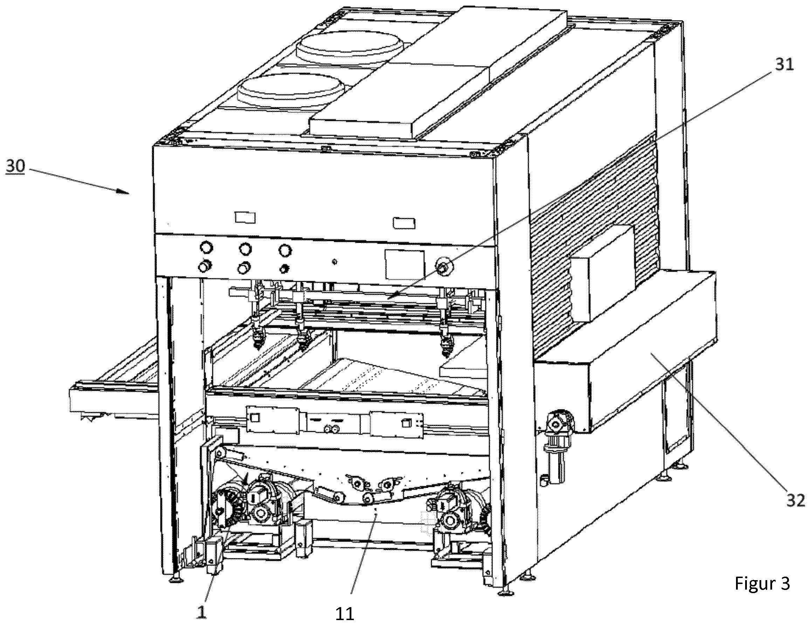

In **Figur 3** ist eine Ansicht einer erfindungsgemäße Beschichtungsanlage mit der Vorrichtung aus Figur 2 gezeigt.

Die Beschichtungsanlage 30 weist eine Lackauftragseinrichtung 31, ein Transportband 32 und die Vorrichtung 1 auf. In der Blattebene ist die Vorrichtung 1 in einem Bereich unterhalb des Transportbandes 32 angeordnet.

Die Lackauftragseinrichtung 31 ist vorgesehen, zu lackierende Bauteile, die auf dem Transportband 32 aufgelegt sind, zu lackieren. Vorzugsweise weist die Lackauftragseinrichtung 31 ein Spritzsystem auf, um einen Lackauftrag auf die zu lackierenden Bauteil zu ermöglichen.
Während eines Lackiervorganges wird die mit Overspray versetzte Luft von den Abscheidemitteln der Abscheidern, wie oben beschrieben aufgenommen. Dabei unterstützt die Luftansaugvorrichtung eine Förderung der mit Overspray versetzten Luft in Richtung nach unterhalb der Abscheider.
Durch das Vorsehen der Beschichtungsanlage mit der Vorrichtung wird eine Anlage bereitgestellt, die gegenüber den aus den Stand der Technik bekannten Anlagen einen hohen Wirkungsgrad mit einem einfachen Aufbau aufweist.

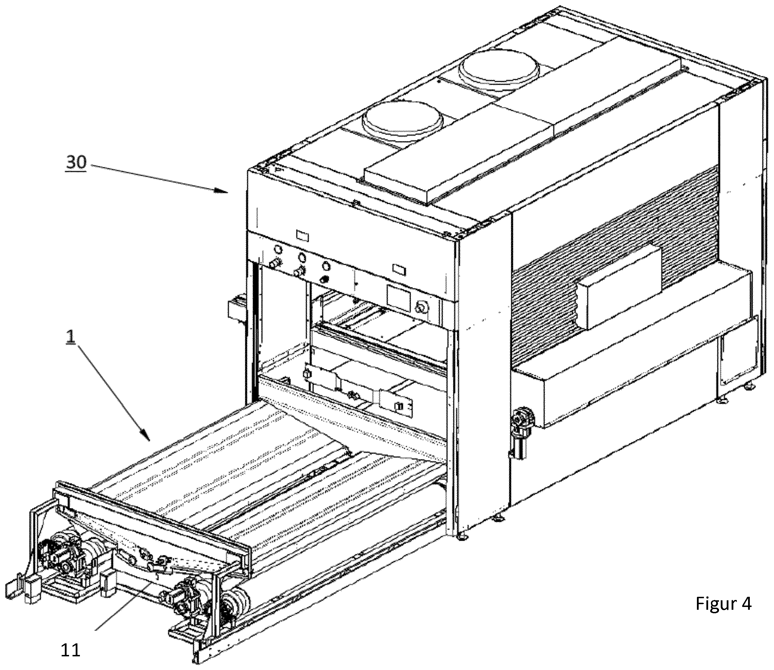

In **Figur 4** ist eine weitere Ansicht der erfindungsgemäße Beschichtungsanlage gezeigt.
Im Unterschied zur Figur 3 ist die Vorrichtung 1 mit der Filtereinheit 11 aus der Beschichtungsanlage 30 ausgefahren. In dieser Position lassen sich die aufgerollten und mit Overspray versehenen Abscheidemittel 3, 13 aus der Vorrichtung 1 entnehmen.

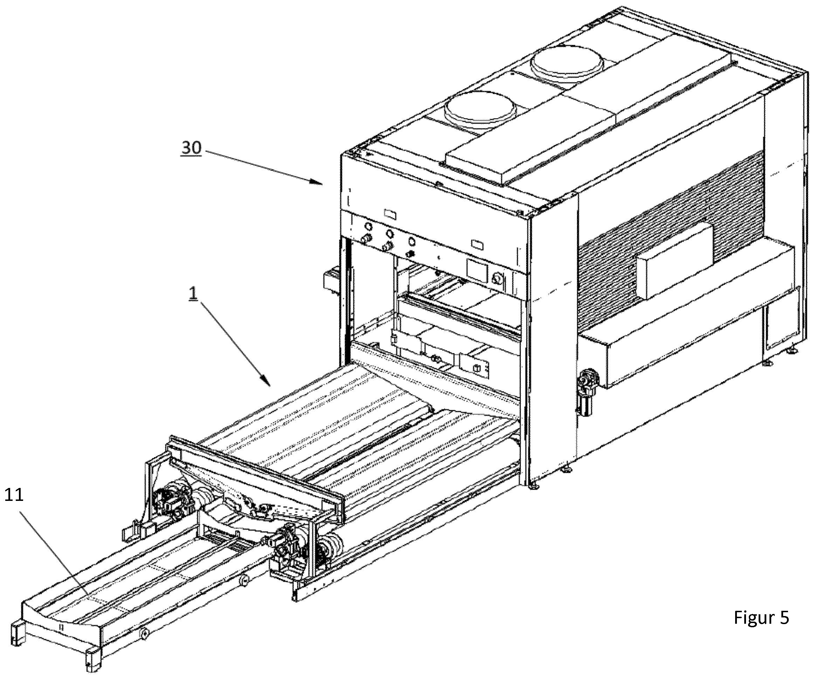

In **Figur 5** ist eine weitere Ansicht der erfindungsgemäße Beschichtungsanlage gezeigt.
Im Unterschied zur Figur 3 ist die Filtereinheit 11 aus der Vorrichtung 1 ausgefahren. In dieser Position lässt sich die Filtereinheit 11 von den Oversprayresten auf einfache Weise reinigen.

### Bezugszeichenliste

- 1: Vorrichtung
- 2: Abscheider
- 3: Abscheidemittel
- 4: Abrollvorrichtung
- 5: Umlenkmittel
- 6: Umlenkmittel
- 7: Umlenkmittel
- 8: Aufrollvorrichtung
- 9: Tragkonstruktion
- 10: Luftansaugvorrichtung
- 11: Filtereinheit
- 12: Abscheider
- 13: Abscheidemittel
- 14: Abrollvorrichtung
- 15: Umlenkmittel
- 16: Umlenkmittel
- 17: Umlenkmittel
- 18: Aufrollvorrichtung
- 19: Bereich
- 20: Bereich
- 21: mit Overspray versetzte Luft
- 22: Spalt

- 25: Drehrichtung
- 26: Förderrichtung
- 27: Drehrichtung
- 28: Förderrichtung
- 30: Beschichtungsanlage (Lackiervorrichtung)
- 31: Lackauftragseinrichtung
- 32: Transportband

## Patentansprüche

1. Vorrichtung (1) zum Abscheiden von Overspray aufweisend einen ersten Abscheider (2) mit einem ersten Abscheidemittel (3), wobei das erste Abscheidemittel (3) einen ersten Overspray aufnehmenden Bereich (19) aufweist und einen zweiten Abscheider (12) mit einem zweiten Abscheidemittel (13), wobei das zweite Abscheidemittel (13) einen zweiten Overspray aufnehmenden Bereich (20) aufweist und wobei die Overspray aufnehmenden Bereiche (19, 20) gegeneinander geneigt sind,
wobei das erste Abscheidemittel (3) das zweite Abscheidemittel (13) zumindest teilweise überdeckt,
wobei der erste Abscheider (2) eine erste Abrollvorrichtung (4) und eine erste Aufrollvorrichtung (8) aufweist, um das erste Abscheidemittel (3) von der ersten Abrollvorrichtung (4) abzurollen und auf die erste Aufrollvorrichtung (8) aufzurollen und der zweite Abscheider (12) eine zweite Abrollvorrichtung (14) und eine zweite Aufrollvorrichtung (18) aufweist, um das zweite Abscheidemittel (13) von der zweiten Abrollvorrichtung (14) abzurollen und auf die zweite Aufrollvorrichtung (18) aufzurollen,
wobei in einem Bereich zwischen der ersten Abrollvorrichtung (4) und der ersten Aufrollvorrichtung (8) des ersten Abscheiders (2) in der Vorrichtung (1) eine Luftansaugvorrichtung vorgesehen ist und wobei in einem Bereich zwischen der zweiten Abrollvorrichtung (14) und der zweiten Aufrollvorrichtung (18) des zweiten Abscheiders (12) eine weitere Luftansaugvorrichtung vorgesehen ist, wobei die Luftansaugvorrichtungen eingerichtet sind, mit Overspray versetzte Luft in Richtung zu den Overspray aufnehmenden Bereichen (19, 20) der Abscheidemittel (3, 13) zu fördern.

2. Vorrichtung (1) gemäß Anspruch 1, wobei die Overspray aufnehmenden Bereiche (19, 20) aufeinander zulaufend oder voneinander weglaufend ausgebildet sind.

3. Vorrichtung (1) gemäß einem der vorherigen Ansprüche, wobei die Abscheidemittel (3, 13) Bahnen aus Papier, Vlies, Folien oder einer Mischung davon sind, insbesondere ein zumindest teilweise auf Folie aufgebrachtes Papier.

4. Vorrichtung (1) gemäß einem der vorherigen Ansprüche, wobei der erste Abscheider (2) mindestens eine Umlenkrolle (5, 6, 7) zur Führung des ersten Abscheidemittels (3) aufweist und wobei der zweite Abscheider (12) mindestens eine Umlenkrolle (15, 16, 17) zur Führung des zweiten Abscheidemittels (13) aufweist.

5. Vorrichtung (1) gemäß einem der vorherigen Ansprüche, wobei dem ersten Abscheider (2) und dem zweiten Abscheider (12) in der Vorrichtung (1) eine Luftansaugvorrichtung (10) nachgeschaltet ist, wobei die Luftansaugvorrichtung (10) eingerichtet ist, mit Overspray versetzte Luft in Richtung zu den Overspray aufnehmenden Bereichen (19, 20) der Abscheidemittel (3, 13) zu fördern.

6. Vorrichtung (1) gemäß einem der vorherigen Ansprüche, wobei die Vorrichtung (1) wenigstens eine Filtereinheit (11) aufweist.

7. Vorrichtung (1) gemäß einem der vorherigen Ansprüche, wobei das Abscheidemittel ein endloses Band ist.

8. Beschichtungsanlage (30) aufweisend eine Lackauftragseinrichtung (31), ein Transportband (32) und eine Vorrichtung (1) gemäß einem der vorherigen Ansprüche.

## Claims

1. Device (1) for separating overspray having a first separator (2) with a first separating means (3), wherein the first separating means (3) has a first overspray-receiving area (19), and a second separator (12) with a second separating means (13), wherein the second separating means (13) has a second overspray-receiving area (20), and wherein the overspray-receiving areas (19, 20) are inclined relative to each other, wherein the first separating means (3) at least partially overlaps the second separating means (13),
wherein the first separator (2) has a first unrolling device (4) and a first rolling device (8), in order to unroll the first separating means (3) from the first unrolling device (4) and to roll it onto the first rolling device (8), and the second separator (12) has a second unrolling device (14) and a second rolling device (18), in order to unroll the second separating means (13) from the second unrolling device (14) and to roll it onto the second rolling device (18),
wherein an air-intake device is provided in an area between the first unrolling device (4) and the first rolling device (8) of the first separator (2) in the device (1) and wherein a further air-intake device is provided in an area between the second unrolling device (14) and the second rolling device (18) of the second separator (12), wherein the air-intake devices are equipped to convey air charged with overspray in the direction of the overspray-receiving areas (19, 20) of the separating means (3, 13).

2. Device (1) according to claim 1, wherein the overspray-receiving areas (19, 20) are formed running towards each other or running away from each other.

3. Device (1) according to one of the preceding claims, wherein the separating means (3, 13) are webs of paper, non-woven material, films or a mixture thereof, in particular a paper at least partially applied to film.

4. Device (1) according to one of the preceding claims, wherein the first separator (2) has at least one deflection roller (5, 6, 7) for guiding the first separating means (3) and wherein the second separator (12) has at least one deflection roller (15, 16, 17) for guiding the second separating means (13).

5. Device (1) according to one of the preceding claims, wherein an air-intake device (10) is arranged downstream of the first separator (2) and the second separator (12) in the device (1), wherein the air-intake device (10) is equipped to convey air charged with overspray in the direction of the overspray-receiving areas (19, 20) of the separating means (3, 13).

6. Device (1) according to one of the preceding claims, wherein the device (1) has at least one filter unit (11).

7. Device (1) according to one of the preceding claims, wherein the separating means is an endless belt.

8. Spray booth (30) having a paint applicator (31), a conveyor belt (32) and a device (1) according to one of the preceding claims.

## Revendications

1. Dispositif (1) de séparation de la surpulvérisation comportant un premier séparateur (2) avec un premier moyen de séparation (3), le premier moyen de séparation (3) comportant une première zone (19) recevant une surpulvérisation et un deuxième séparateur (12) avec un deuxième moyen de séparation (13), le deuxième moyen de séparation (13) comportant une deuxième zone (20) recevant une surpulvérisation et les zones (19, 20) recevant une surpulvérisation étant inclinées en quinconce, le premier moyen de séparation (3) recouvrant au moins en partie le deuxième moyen de séparation (13) ;
le premier séparateur (2) comportant un premier dispositif de déroulement (4) et un premier dispositif d'enroulement (8) pour dérouler le premier moyen de séparation (3) à partir du premier dispositif de déroulement (4) et l'enrouler sur le premier dispositif d'enroulement (8) et le deuxième séparateur (12) comportant un deuxième dispositif de déroulement (14) et un deuxième dispositif d'enroulement (18) pour dérouler le deuxième moyen de séparation (13) à partir du deuxième dispositif de déroulement (14) et l'enrouler sur le deuxième dispositif d'enroulement (18) ;
un dispositif d'aspiration d'air étant prévu dans un dispositif (1) dans une zone entre le premier dispositif de déroulement (4) et le premier dispositif d'enroulement (8) du premier séparateur (2) et un autre dispositif d'aspiration d'air étant prévu dans une zone entre le deuxième dispositif de déroulement (14) et le deuxième dispositif d'enroulement (18) du deuxième séparateur (12), les dispositifs d'aspiration d'air étant conçus pour transporter l'air chargé de surpulvérisation en direction des zones (19, 20) du moyen de séparation (3, 13) recevant une surpulvérisation.

2. Dispositif (1) selon la revendication 1, les zones (19, 20) recevant la surpulvérisation étant réalisées de façon à converger l'une vers l'autre ou à diverger l'une par rapport à l'autre.

3. Dispositif (1) selon l'une quelconque des revendications précédentes, les moyens de séparation (3, 13) étant des bandes de papier, de non-tissé, des films ou un mélange de ceux-ci, notamment un papier au moins en partie appliqué sur un film.

4. Dispositif (1) selon l'une quelconque des revendications précédentes, le premier séparateur (2) comportant au moins un rouleau de déviation (5, 6, 7) pour le guidage du premier moyen de séparation (3) et le deuxième séparateur (12) comportant au moins un rouleau de déviation (15, 16, 17) pour le guidage du deuxième moyen de séparation (13).

5. Dispositif (1) selon l'une quelconque des revendications précédentes, un dispositif d'aspiration d'air (10) étant connecté en aval du premier séparateur (2) et du deuxième séparateur (12) dans le dispositif (1), le dispositif d'aspiration d'air (10) étant conçu pour transporter de l'air chargé de surpulvérisation en direction des zones des moyens de séparation (3, 13) recevant la surpulvérisation (19, 20).

6. Dispositif (1) selon l'une quelconque des revendications précédentes, le dispositif (1) comportant au moins une unité de filtre (11).

7. Dispositif (1) selon l'une quelconque des revendications précédentes, le moyen de séparation étant une courroie sans fin.

8. Installation de revêtement (30) comportant une disposition d'application de laque (31), une courroie de transport (32) et un dispositif (1) selon l'une quelconque des revendications précédentes.
